# EUROPEAN PATENT APPLICATION

(11) **EP 1 806 060 A1**
(43) Date of publication of application: **11.07.2007**
(21) Application number: 05793807.8
(22) Date of filing: 05.10.2005
(51) Int. Cl.: A23L 2/00, A23L 2/42, C12H 1/20

(54) **DRINK STERILIZATION METHOD AND DRINK STERILIZER**

(30) Priority: 14.10.2004 JP 2004299986
(71) Applicant: SUNTORY LIMITED, Osaka-shi, Osaka 530-8203 (JP)
(72) Inventor: NAGAOKA, Kenju, Higashikurume-shi, Tokyo 2030012 (JP); KOBAYASHI, Toshiya, Suntory Limited, Suginami-ku, Tokyo 1680065 (JP)
(74) Representative: Stoner, Gerard Patrick
(86) International application number: PCT/JP2005/018725
(87) International publication number: WO 2006/041066

(57) **Abstract**

A beverage sterilization method and a beverage sterilization apparatus for carrying out the method are provided, wherein a container hermetically sealed and filled with a beverage which generates a gas from itself when heated to a temperature required for sterilization is arranged in a pressurized chamber (20), the pressure of the pressurized chamber is increased in such a manner that the pressure difference (M2 - M1) between the container pressure (M2) and the pressure (M1) of the pressurized chamber remains in a predetermined range while at the same time increasing the container temperature (L1) by increasing the internal temperature (L1) of the pressurized chamber to a predetermined level, the container in the pressurized chamber is held at a predetermined temperature for a predetermined length of time thereby to sterilize the beverage, and the pressure of the pressurized chamber is decreased so that the difference between the container pressure and the pressure of the pressurized chamber remains within a predetermined range while at the same time decreasing the container temperature by decreasing the internal temperature of the pressurized chamber. As a result, the beverage in the container can be sterilized by heat without deforming or breaking the container even during the temperature increase or decrease of the pressurized chamber having arranged therein the container filled with a beverage which generates a gas when heated.

## Description

### TECHNICAL FIELD

This invention relates to a beverage sterilization method and a beverage sterilization apparatus to carry out the method for sterilizing a beverage which generates a gas from the inside thereof when heated to the temperature required for sterilization, such as a beverage containing a component low in boiling point such as an alcohol or a carbonated beverage containing carbon dioxide gas.

### BACKGROUND ART

Normally, a beverage hermetically sealed in a container is sterilized by being maintained at a predetermined temperature suitable for sterilization for a predetermined length of time. Also, in the case of a beverage which generates a gas from the inside thereof when heated to the temperature required for sterilization such as a beverage containing a low-boiling-point component such as an alcohol or a carbonated beverage containing carbon dioxide gas and which contains no plant tissue component, the function of carbon dioxide gas, i.e. the reduction in pH value or oxygen amount can suppress the proliferation of microorganisms, and therefore, the heat sterilization is not carried out. Some beverages containing a plant tissue component which generate a gas from the inside thereof when heated, however, may require the heat sterilization. In such a case, a pasteurizer for heat sterilization is used in which a plurality of containers filled with the beverage and hermetically sealed are heat-sterilized by being continuously sprayed with hot water under the atmospheric pressure. In this pasteurizer, the heat sterilization is conducted under the atmospheric pressure, and therefore, the upper limit of the temperature at which the containers can be heated is comparatively low. In the case where the sterilization is required at a higher than the upper limit of the temperature at which the containers can be heated in the pasteurizer, therefore, a retort device is used in which a hermetic space for accommodating the containers can be formed. In the retort device, hot water can be sprayed on the containers within the hermetic space, and therefore, the heat sterilization is possible at a higher temperature than in the pasteurizer.

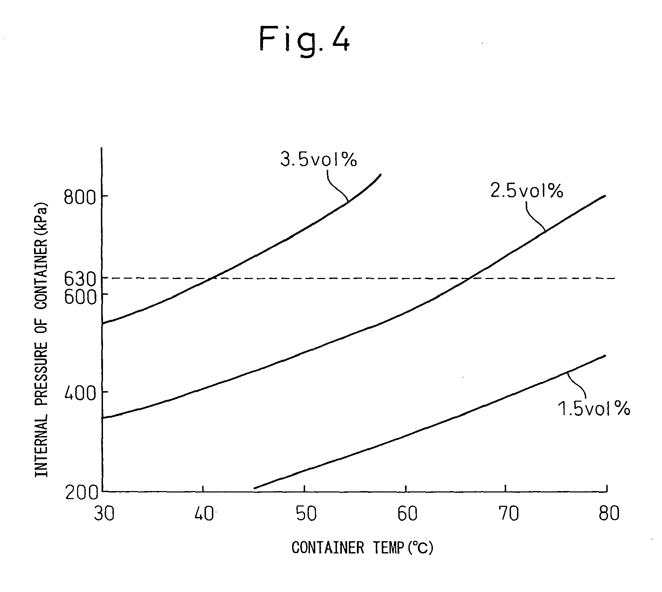

In the case where the container, which is hermetically sealed and is filled with a beverage requiring the heat sterilization is heated to a predetermined temperature adapted for sterilization, however, the internal pressure of the container is considerably increased by the gasification of a low-boiling-point component or the generation of carbon dioxide gas. Fig. 4 is a diagram showing the relation between the temperature and the internal pressure of a 250-ml aluminum can used as a container. The critical pressure of the 250-ml aluminum can is about 630 kPa (gage pressure), for example, as indicated by dashed line. In the case where the can, as a container filled with a beverage containing 2.5 vol. % carbon dioxide, is heated to a temperature higher than about 65 °C under the atmospheric pressure as shown in Fig. 4, for example, the pressure difference between the internal pressure of the can and the atmospheric pressure exceeds the critical pressure (gage pressure) of the can, and therefore, the can is deformed and broken. Therefore, the heat sterilization process at a comparatively low temperature is required so that the pressure difference between inside and outside the container when heated may not exceed the critical pressure (gage pressure). For this reason, the heating temperature is required to be lower, the larger the content of a low-boiling-point component such as alcohol which may be contained in the beverage requiring the heat sterilization and generating a gas from itself when heated, or the larger the content of carbon dioxide in a carbonated beverage which may be filled in the can. In the case where this beverage is sterilized by heat, therefore, the heating time is extended and this causes a greatly reduced productivity. Also, the heating temperature is required to be not lower than the sterilizing temperature capable of sterilizing the beverage. Depending on the content of the low-boiling-point component and/or the carbon dioxide, however, the heating temperature is unavoidably reduced below the sterilizable temperature. In such a case, the beverage, even if heated, cannot be sterilized. Further, the extension of the heating time may degenerate the flavor components of the beverage and adversely affect the taste thereof.

In order to solve this problem, Japanese Unexamined Patent Publication No. 11-221062 discloses a method in which a container filled with a beverage is arranged in a pressurized chamber of a retort device and a liquid heating medium heated to not lower than the temperature at which a gas is generated from the beverage is sprayed on the container, while at the same time supplying the compressed air thereby to increase the internal pressure of the pressurized chamber. As a result, even in the case where a gas is generated from the beverage and the pressure of the container is increased by heating the container up to the temperature required for sterilization, the pressure difference between the container and the pressurized chamber does not exceed the critical pressure and, therefore, the particular beverage can be sterilized by heat without deforming or breaking the container.

In the retort device disclosed in Japanese Unexamined Patent Publication No. 11-221062, however, although the container is not deformed or broken while being actually sterilized, the problem remains unsolved that the container arranged in the pressurized chamber may be deformed or broken in the case where the temperature of the pressurized chamber is increased to a sterilizable level and/or the temperature of the pressurized chamber is decreased to recover the container from the pressurized chamber.

The present inventor, after making vigorous research efforts to overcome this subject, has acquired the knowledge that the aforementioned problem can be solved by controlling the temperature increase/decrease of the pressurized chamber in such a manner that the pressure difference between the container and the pressurized chamber may not exceed the critical pressure and has finally achieved this invention by constructing a beverage sterilization method and a beverage sterilization apparatus.

Accordingly, it is an object of this invention to provide a beverage sterilization method and a beverage sterilization apparatus for carrying out the sterilization method in which a beverage filled in a container, or especially, a beverage filled in a container and generating a gas from itself if heated to the temperature required for sterilization, can be sterilized by heat without deforming or breaking the container even during the increase or decrease in the temperature of the pressurized chamber having arranged therein the container.

### DISCLOSURE OF THE INVENTION

In order to achieve the object described above, according to a first aspect of the invention, there is provided a beverage sterilization method, comprising a step of: arranging a container in a pressurized chamber, the container is hermetically sealed and is filled with a beverage, increasing the pressure of the pressurized chamber to a first pressure, increasing the temperature of the container by increasing the internal temperature of the pressurized chamber to a first temperature in such a manner that the difference between the pressure of the container and the first pressure of the pressurized chamber at the first temperature may remain within a predetermined range, sterilizing the beverage in the container by holding the pressurized chamber at the first temperature for a predetermined length of time, decreasing the temperature of the container by decreasing the internal temperature of the pressurized chamber to a second temperature, which is lower than the first temperature, in such a manner that the difference between the pressure of the container and the first pressure of the pressurized chamber at the second temperature may remain within a predetermined range, and decreasing the pressure of the pressurized chamber to a second pressure lower than the first pressure.

Specifically, in the first aspect, the temperature of the pressurized chamber is increased after increasing the pressure around the container, i.e. the pressure of the pressurized chamber to the first pressure. Even in the case where the internal pressure of the container is increased with the temperature increase of the pressurized chamber, therefore, the difference between the internal pressure and the external pressure of the container in the pressurized chamber is not increased beyond the critical pressure (gage pressure), thereby making it possible to prevent the container from being deformed or broken during the temperature increase of the pressurized chamber. Further, in the first aspect, the pressure of the pressurized chamber is decreased after reducing the internal pressure of the container by reducing the temperature of the pressurized chamber to the second temperature. Specifically, the pressure of the pressurized chamber is reduced after reducing the difference between the internal pressure and the external pressure of the container in the pressurized chamber. Therefore, the difference between the internal pressure and the external pressure of the container in the pressurized chamber never exceeds the critical pressure (gage pressure), and therefore, the container is prevented from being deformed or broken while the temperature of the pressurized chamber is being decreased. Thus, in the first aspect, the beverage in the container can be sterilized by heat without deforming or breaking the container even during the temperature increase or decrease of the pressurized chamber having arranged therein the container filled with the beverage.

According to a second aspect, there is provided a beverage sterilization method, comprising a step of: arranging a container in a pressurized chamber, the container is hermetically sealed and is filled with a beverage, increasing the temperature of the container by increasing the internal temperature of the pressurized chamber to a predetermined temperature and by increasing the pressure of the pressurized chamber in such a manner that the difference between the pressure of the container and the pressure of the pressurized chamber may remain within a predetermined range, sterilizing the beverage in the container by holding the pressurized chamber at the predetermined temperature for a predetermined length of time, and decreasing the temperature of the container by decreasing the internal temperature of the pressurized chamber and by decreasing the pressure of the pressurized chamber in such a manner that the difference between the pressure of the container and the pressure of the pressurized chamber may remain within a predetermined range.

Specifically, in the second aspect, the internal pressure of the pressurized chamber is increased and decreased in such a manner that the difference between the internal pressure of the pressurized chamber and the pressure of the container remains within a predetermined range, and therefore, even in the case where the temperature of the pressurized chamber is increased or decreased, the difference between the internal pressure and the external pressure of the container never exceeds the critical pressure (gage pressure). Even in the case where the temperature of the pressurized chamber having arranged therein a container filled with a beverage increases or decreases, therefore, the beverage in the container can be sterilized by heat without deforming or breaking the container. Further, in the second aspect, the pressure and temperature of the pressurized chamber are increased at the same time on the one hand, and the pressure and temperature of the pressurized chamber are decreased at the same time on the other hand, thereby making it possible to sterilize the beverage in a shorter time than in the first aspect.

According to a third aspect, in the first or second aspect, the beverage is of such a type as to generate a gas from itself when heated to the temperature required for sterilization of the particular beverage.

Specifically, in the third aspect, the internal pressure of the container filled with such beverage may increase remarkably at the time of increasing the temperature of the container as compared with that of the container filled with a normal beverage, and therefore, the pressure of the pressurized chamber can be increased very advantageously when increasing the temperature of the container. The beverage generating a gas from itself when heated to the temperature required for sterilization may be a beverage containing a low-boiling-point component such as alcohol or a carbonated beverage containing carbon dioxide gas.

According to a fourth aspect, in the first or third aspect, the pressure of the pressurized chamber is decreased upon lapse of a predetermined length of time after decreasing the internal temperature of the pressurized chamber.

Specifically, in the fourth aspect, the pressure of the pressurized chamber is decreased upon lapse of a sufficient length of time to reduce the container pressure to a level where the pressure difference may not exceed the predetermined range, and therefore, the pressure difference between the container and the pressurized chamber is positively prevented from exceeding the predetermined range or the critical pressure (gage pressure).

According to a fifth embodiment, in any one of the first to fourth aspects, the pressure of the container is increased by exerting a mechanical force on the container.

Specifically, in the fifth aspect, in order to increase the container pressure, not only the pressure of the pressurized chamber is increased, but also a mechanical force is exerted on the container, which helps to increase the container pressure with the pressure of the pressurized chamber. Therefore, in the case where the pressure of the pressurized chamber is increased by supplying the compressed air, for example, the amount of the compressed air used can be reduced. On the other hand, in a case in which the pressure of the pressurized chamber is increased only by supplying the compressed air while at the same time increasing the temperature of the container by supplying the heated water to the pressurized chamber, as it becomes difficult to supply the heated water into the pressurized chamber once the pressure of the pressurized chamber exceeds a certain value, a pump having a comparatively large head is required to make it possible to supply the heated water under a high pressure. In the fifth aspect, however, the amount of the compressed air in the pressurized chamber can be reduced by an amount equivalent to the mechanical force exerted on the container, with the result that the heated water can be supplied to the pressurized chamber with comparative ease. For supplying the heated water, therefore, a pump having a comparatively low head can be employed.

According to a sixth aspect, there is provided a beverage sterilization apparatus comprising a pressurized chamber accommodating a container, which is hermetically sealed and is filled with a beverage, a pressure increasing/decreasing means for increasing or decreasing the pressure of the pressurized chamber, a temperature increasing/decreasing means for increasing or decreasing the temperature of the container by increasing or decreasing the temperature of the pressurized chamber, and a control means to control the pressure increasing/decreasing means and the temperature increasing/decreasing means to sterilize the beverage in the container, wherein the control means increases the pressure of the pressurized chamber to a first pressure using the pressure increasing/decreasing means, increases the internal temperature of the pressurized chamber to a first temperature using the temperature increasing/decreasing means in such a manner that the difference between the pressure of the container and the first pressure of the pressurized chamber at the first temperature may remain within a predetermined range, sterilize the beverage in the container by holding the pressurized chamber at the first temperature for a predetermined length of time, decreases the internal temperature of the pressurized chamber to a second temperature, which is lower than the first temperature, using the temperature increasing/decreasing means in such a manner that the difference between the pressure of the container and the first pressure of the pressurized chamber at the second temperature may remain within a predetermined range, and decreases the pressure of the pressurized chamber to a second pressure lower than the first pressure using the pressure increasing/decreasing means.

Specifically, in the sixth aspect, the temperature of the pressurized chamber is increased after increasing the pressure around the container, i.e. the pressure of the pressurized chamber to the first pressure in advance. Even in the case where the internal pressure of the container increases with the temperature increase of the pressurized chamber, therefore, the difference between the internal and external pressures of the container in the pressurized chamber never exceeds the critical pressure (gage pressure) of the container. Thus, the deformation and breakage of the container is avoided even when the temperature of the pressurized chamber increases. Further, in the sixth aspect, the pressure of the pressurized chamber is decreased after decreasing the internal pressure of the container in advance by decreasing the temperature of the pressurized chamber to the second temperature. Specifically, the pressure of the pressurized chamber is decreased after reducing the difference between the internal and external pressures of the container in the pressurized chamber in advance, and therefore, the difference between the internal and external pressures of the container in the pressurized chamber never exceeds the critical pressure (gage pressure) of the container. Even when the pressure of the pressurized chamber decreases, therefore, the container is prevented from being deformed or broken. In other words, in the sixth aspect, the beverage filled in the container can be sterilized by heat without deforming or breaking the container even in the case where the temperature of the pressurized chamber having the container therein is increased or decreased.

According to a seventh aspect, there is provided a beverage sterilization apparatus comprising a pressurized chamber accommodating a container which is hermetically sealed and is filled with a beverage, a pressure increasing/decreasing means for increasing or decreasing the pressure of the pressurized chamber, a temperature increasing/decreasing means for increasing or decreasing the temperature of the container by increasing or decreasing the temperature of the pressurized chamber, and a control means to control the pressure increasing/decreasing means and the temperature increasing/decreasing means to sterilize the beverage in the container, wherein the control means increases the internal temperature of the pressurized chamber to a predetermined temperature using the temperature increasing/decreasing means, while increasing the pressure of the pressurized chamber using the pressure increasing/decreasing means in such a manner that the difference between the pressure of the container and the pressure of the pressurized chamber may remain within a predetermined range, sterilizing the beverage in the container by holding the pressurized chamber at the predetermined temperature for a predetermined length of time, and decreases the internal temperature of the pressurized chamber using the temperature increasing/decreasing means, while decreasing the pressure of the pressurized chamber using the pressure increasing/decreasing means in such a manner that the difference between the pressure of the container and the pressure of the pressurized chamber may remain within a predetermined range.

Specifically, in the seventh aspect, the internal pressure of the pressurized chamber is increased and decreased in such a manner that the difference between the internal pressure of the pressurized chamber and the container pressure remains in a predetermined range. Even in the case where the temperature of the pressurized chamber is increased or decreased, therefore, the difference between the internal and external pressures of the container never exceeds the critical pressure (gage pressure). As a result, even at the time of increasing or decreasing the temperature of the pressurized chamber having the container filled with the beverage therein, the beverage in the container can be sterilized by heat without deforming or breaking the container. Further, in the seventh aspect, the pressure and temperature of the pressurized chamber are increased at the same time on the one hand and the pressure and temperature of the pressurized chamber are decreased at the same time on the other hand, thereby making it possible to sterilize the beverage within a shorter time than in the sixth aspect.

According to an eighth aspect, in the sixth or seventh aspect, the beverage is of such a type as to generate a gas from itself when heated to the temperature required for sterilization.

Specifically, in the eighth aspect, when the temperature of the container filled with such beverage is increased, the internal pressure of the container may increase remarkably as compared with the normal beverage, and therefore, the pressure of the pressurized chamber can be very advantageously increased when increasing the container temperature. The beverage generating a gas from itself once heated to a temperature required for sterilization may be a beverage containing a low-boiling-point component such as alcohol or a carbonated beverage containing carbon dioxide gas.

According to a ninth aspect, in the sixth or eighth aspect, wherein the pressure of the pressurized chamber is decreased using the pressure increasing/decreasing means upon lapse of a predetermined length of time after decreasing the internal temperature of the pressurized chamber using the temperature increasing/decreasing means.

Specifically, in the ninth aspect, the pressure of the pressurized chamber is decreased upon lapse of a sufficient length of time to reduce the container pressure approximately to a level at which the pressure difference does not exceed the predetermined range, and therefore, the difference between the container pressure and the pressure of the pressurized chamber can be positively prevented from exceeding the predetermined range or the critical pressure.

According to a tenth aspect, in any one of the sixth to ninth aspects, the pressure increasing/decreasing means includes a mechanical pressure unit for pressuring the container by applying a mechanical force to the container in the pressurized chamber.

Specifically, in the tenth aspect, not only the pressure of the pressurized chamber is increased but also a mechanical pressure is exerted on the container to increase the container pressure, which can help to increase the container pressure with the pressure of the pressurized chamber. In the case where the pressure of the pressurized chamber is increased by supplying the compressed air, therefore, the amount of the compressed air used can be reduced. Also, in the case where the pressure of the pressurized chamber is increased only by supplying the compressed air while the temperature of the container is increased by supplying the heated water to the pressurized chamber, on the other hand, it becomes difficult to supply the heated water into the pressurized chamber if the pressure of the pressurized chamber exceeds a certain value. Therefore, a pump having a comparatively high head is required to supply the heated water under a high pressure. In the tenth aspect, however, the amount of the compressed air in the pressurized chamber can be reduced by the mechanical force exerted on the container, with the result that the heated water can be supplied to the pressurized chamber with comparative ease. Thus, the pump having a comparatively low head serves the purpose of supplying the heated water.

According to an 11th aspect, there is provided a beverage sterilization apparatus comprising a chamber for arranging a container hermetically sealed with a beverage filled therein, a mechanical pressure means for applying pressure to the container in the chamber by exerting a mechanical force on the container, and a temperature increasing/decreasing means for increasing or decreasing the temperature of the container by increasing or decreasing the temperature of the pressurized chamber, wherein the container pressured by the mechanical pressure means is held for a predetermined length of time in the chamber increased in temperature by the temperature increasing/decreasing means thereby to sterilize the beverage in the container.

Specifically, in the 11th aspect, the container pressure is increased by applying a force directly to the container by the mechanical pressure means. Therefore, as compared with a case where the container pressure is increased indirectly by increasing the pressure of air around the container, for example, the container pressure can be increased rapidly and positively.

According to a 12th aspect, in the 11th aspect, the beverage generates a gas from itself when heated to the temperature required for sterilization thereof.

Specifically, in the 12th aspect, the internal pressure of the container can be increased remarkably as compared with the normal beverage at the time of increasing the container temperature, and therefore, the pressure of the pressurized chamber can be increased very advantageously when increasing the temperature of the container. Also, the beverage which generates a gas from itself when heated to the temperature required for sterilization can be a beverage containing a low-boiling-point component such as alcohol or a carbonated beverage containing carbon dioxide gas.

All the aspects described above share the advantage that the beverage in the container can be sterilized by heat without deforming or breaking the container even when the temperature of the pressurized chamber having arranged therein a container filled with the beverage is increased or decreased.

Further, in the second aspect, the sterilization process can be completed advantageously within a short time.

Further, in the third aspect, the pressure of the pressurized chamber can be increased very advantageously when increasing the container temperature.

Further, in the fourth aspect, the difference between the container pressure and the pressure of the pressurized chamber is positively prevented from exceeding the predetermined range.

Further, in the fifth aspect, the increase in container pressure with the pressure of the pressurized chamber can be further helped.

Further, in the seventh aspect, the sterilization process can be completed within a short time.

Further, in the eighth aspect, the pressure of the pressurized chamber is very advantageously increased when increasing the temperature of the container.

Further, in the ninth aspect, the difference between the container pressure and the pressure of the pressurized chamber can be positively prevented from exceeding the predetermined range.

Further, in the tenth aspect, the increase in container pressure with the pressure of the pressurized chamber can be further helped.

Further, in the 11th aspect, the pressure of the container can be increased both rapidly and positively.

Further, in the 12th aspect, the pressure of the pressurized chamber is very advantageously increased when increasing the temperature of the container.

These and other objects, features and advantages of the invention will be made more apparent by the detailed description of typical embodiments of the invention taken in conjunction with the drawings.

### BRIEF DESCRIPTION OF THE DRAWINGS

Fig. 1 is a schematic diagram showing a beverage sterilization apparatus according to a first embodiment of the invention.
Fig. 2a is a diagram showing the relation between the pressure of the pressurized chamber and the container pressure and time.
Fig. 2b is a diagram showing the relation between the pressure of the pressurized chamber and the container pressure and time.
Fig. 3a is a partly enlarged view showing a beverage sterilization apparatus according to a second embodiment of the invention.
Fig. 3b is a partly enlarged view showing a beverage sterilization apparatus according to another embodiment of the invention.
Fig. 4 is a diagram showing the relation between the temperature and the internal pressure of the container.

### BEST MODE FOR CARRYING OUT THE INVENTION

Embodiments of the invention are explained below with reference to the accompanying drawings. In the drawings described below, the same component parts are designated by the same reference numerals, respectively. To facilitate the understanding, the scale of each drawing is appropriately changed.

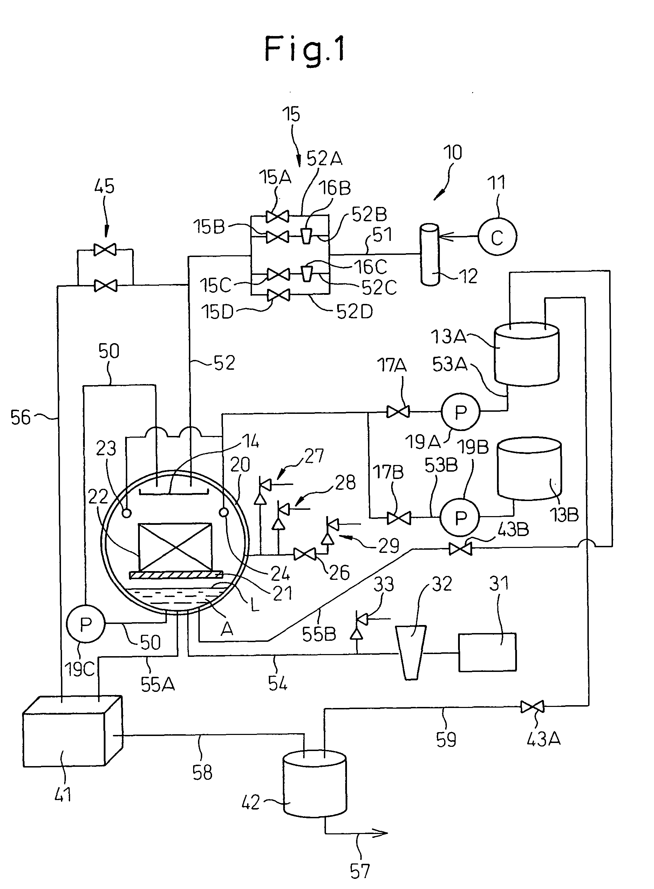

Fig. 1 is a schematic diagram showing a beverage sterilization apparatus according to a first embodiment of the invention. As shown in Fig. 1, the beverage sterilization apparatus 10 includes a pressurized chamber 20 in which a support base 21 is arranged. A carriage box 22 for carrying a plurality of containers (not shown in Fig. 1) hermetically sealed and are filled with a beverage, is arranged on the support base 21. The beverage filled in each container is of such a type as to generate a gas from itself when heated to the temperature required for sterilization, i.e. or a beverage containing a component of a low-boiling-point such as alcohol or a carbonated beverage containing carbon dioxide gas, and which contains a tissue component of a plant, for example, and therefore, is required to be sterilized by heat. Also, each container not shown in Fig 1 is, for example, an aluminum can, a steel can, a PET bottle, a glass bottle, a paper box or a pouch. As an alternative, a plurality of containers can be arranged directly on the support base 21 without using the carriage box 22.

As shown in Fig. 1, a pipe 51 extending from an air tank 12 branches into two pipes 52, 56 downstream of a decompression valve group 15. The pipe 52 communicates with the interior of the pressurized chamber 20. An on/off valve 45 arranged on the pipe 56 is normally closed, and therefore, the air in the air tank 12 is adapted to be supplied into the pressurized chamber 20 through the pipes 51, 52 in a form compressed by a compressor 11.

Also, a pipe 53A extending from a water tank 13A branches into two parts downstream of a pump 19A and a valve 17A and connected to shower nozzles 23, 24, respectively, in the pressurized chamber 20. The liquid such as water stored in the water tank 13A is supplied into the pressurized chamber 20 from the shower nozzles 23, 24 by driving the pump 19A. The pipe 53B extending from a water tank 13B, on the other hand, is connected to the downstream side of the valve 15A of the pipe 53A downstream of a pump 19B and a valve 17B. The liquid stored in the water tank 13B such as water lower in temperature than the water in the water tank 13A is supplied into the pressurized chamber 20 from the shower nozzles 23, 24 by driving the pump 19B. As described later, the interior of the pressurized chamber 20 is maintained at a high pressure, and therefore, the head of the pumps 19A, 19B is higher than the head (about 20 m to 29 m) of the conventional pump, so that water can be supplied into the pressurized chamber 20, which is at high pressure. According to a preferred embodiment, the head of the pumps 19A, 19B can be about 40 m to about 51 m.

Further, a pipe 54 extending from a steam accumulator 31 is connected to the pressurized chamber 20 downstream of a decompression valve 32 and an automatic valve 33 so that the steam formed by the steam accumulator 31 is supplied into the pressurized chamber 20. While the beverage sterilization apparatus 10 is in use, as shown, water is stored up to a level near under the support base 21, and therefore, the pipe 54 is preferably connected to the lower part of the pressurized chamber 20 to heat the water.

Also, a pipe 56 branching from the pipe 51 to supply the compressed air is connected to a drain chamber 41 through the on/off valve 45. The pipe 56 is used for draining the compressed air supplied into the pressurized chamber 20. Further, a pipe 55A for draining water stored in the pressurized chamber 20 is connected to the drain chamber 41. The compressed air and the water, once drained into the drain chamber 41, are drained to a drain water tank 42 through a pipe 58. Further, as shown, the drain water tank 42 is connected to the water tank 13A through the decompression valve 43A. Also, a pipe 55B for draining the water stored in the pressurized chamber 20 is connected to the water tank 13A through the decompression valve 43B.

Further, the pipe 50 extending from the lower part of the pressurized chamber 20 is connected to the upper part of the pressurized chamber 20 through a pump 19C. By driving the pump 19C, the water A stored in the pressurized chamber 20 is circulated through the pipe 50 and supplied to the upper part of the pressurized chamber 20. The forward end of the pipe 50 is set in position above a porous plate 14, and therefore, the water can be sprayed toward the carriage box 22 from the whole of the porous plate 14.

Furthermore, as shown in Fig. 1, the pressurized chamber 20 includes safety valves 27, 28, 29 to automatically protect the containers in the pressurized chamber 20 in the case where the internal pressure of the pressurized chamber 20 excessively increases.

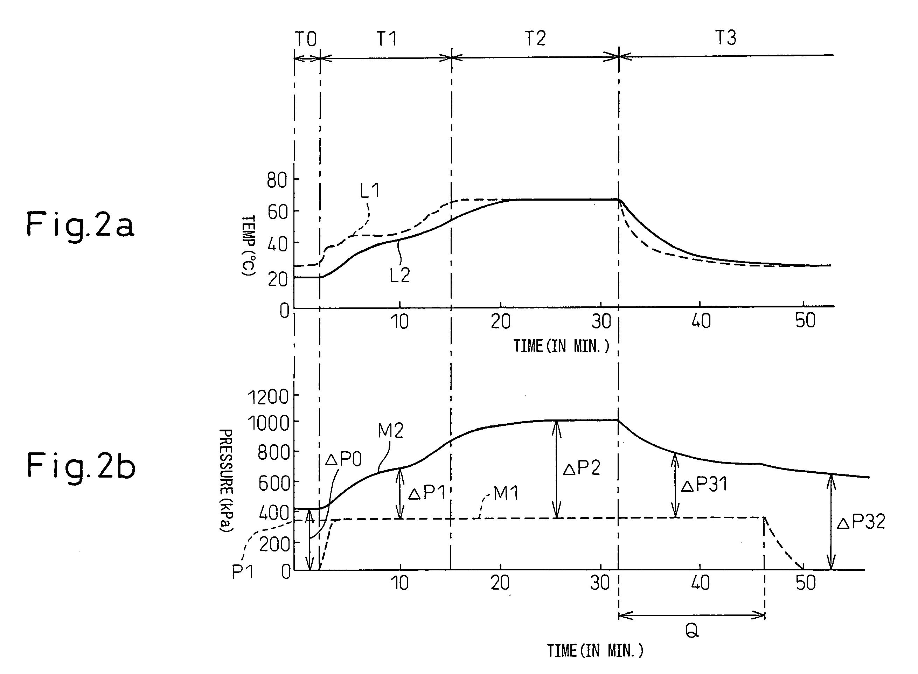

In using the beverage sterilization apparatus 10, a plurality of the containers filled with a beverage and hermetically sealed are charged into the carriage box 22. The carriage box 22 is then arranged on the support base 21, after which the pressurized chamber 20 is hermetically closed. The operation of heating and pressuring the interior of the pressurized chamber 20 of the beverage sterilization apparatus 10 according to one embodiment of the invention is explained below. Fig. 2a is a diagram showing the relation between the temperature of the pressurized chamber 20 and the containers and time, and Fig. 2b a diagram showing the relation between the pressure of the pressurized chamber 20 and the containers and time. In Fig. 2a, the dashed line L1 indicates the internal temperature of the pressurized chamber 20, and the solid line L2 the internal temperature of the containers. Further, in Fig. 2b, the dashed line M1 indicates the internal pressure of the pressurized chamber 20, i.e. the external pressure of the containers, and the solid line M2 the pressure of the containers, i.e. the internal pressure of the containers.

As shown in Fig. 2a, assume that the carriage box 22 for carrying a plurality of the containers is arranged in the pressurized chamber 20 and the pressurized chamber 20 is closed at time point 0. During the period T0 of about 3 minutes following the time point 0 shown in Fig. 2a, the pump 19A is driven and the valve 17A is opened so that the liquid such as water in the water tank 13A is supplied into the pressurized chamber 20 from the shower nozzles 23, 24. As a result, the water A is stored in the lower part of the pressurized chamber 20. Once the water A is stored to the level L just under the support base 21, the pump 19A is stopped and the valve 17A is closed, thereby stopping water supply. As described later, the water A is heated. In the case where the liquid level L of the water A has reached above the support base 21 and a plurality of the containers in the carriage box 22 are immersed in the water, therefore, heat spots may be formed on the container surface due to the air staying between the containers. By adjusting the liquid level of the water A as described above, however, the containers in the carriage box 22 are prevented from developing heat spots. Then, the water A stored in the pressurized chamber 20 is circulated by driving the pump 19C. As a result, the water A is supplied from above the pressurized chamber 20, and sprayed over the whole carriage box 22 by passing through the porous plate 14. As can be seen from Fig. 2b, the internal pressure of the pressurized chamber 20 is 0 kPa during the period T0, and the pressure of the containers filled with the beverage and hermetically sealed is increased beforehand to a predetermined pressure, i.e. about 400 kPa in Fig. 2b.

Next, during the period T1 (about 3 to 15 minutes) following the period T0, the decompression valve 32 and the automatic valve 33 are opened, after which the water steam is generated by driving the steam accumulator 31. Then, the water steam is supplied into the pressurized chamber 20 through the pipe 54. The water steam passes through the water A stored in the pressurized chamber 20, and therefore, the water A is heated. Then, the water A is sprayed from the porous plate 14 through the pipe 50, and therefore, the containers in the carriage box 22 are heated. As a result, as shown in Fig. 2a, during the period T1, the internal temperature L1 of the pressurized chamber 20 first increases, and then the temperature L2 of the containers in the carriage box 22 is increased following the temperature L1. Once the containers are heated, the beverage in the containers is also heated, and therefore, a component of a low-boiling-point such as alcohol which may be contained the beverage in the containers is gasified. In the case where the beverage in the containers is a carbonated one, therefore, carbon dioxide gas is generated. As a result, with the increase of the container temperature L2, the container pressure (internal pressure) M2 also increases gradually.

Also, during the period T1, the decompression valve group 15, described later, is set, after which the compressor 11 is driven so that the air in the air tank 12 is supplied into the pressurized chamber 20 through the pipe 52 in a compressed state. As a result, as can be seen from Fig. 2b, the internal pressure M1 of the pressurized chamber 20 increases from 0 kPa to a predetermined pressure P1 (up to about 380 kPa in Fig. 2b). Then, the compressor 11 is controlled to maintain the internal pressure M1 of the pressurized chamber 20 at the predetermined pressure P1.

Next, during the period T2 (about 15 to 32 minutes), if the internal temperature L1 of the pressurized chamber 20 reaches a predetermined temperature (about 65 °C in Fig. 2a) adapted for sterilization of the containers and the beverage in the containers, the steam accumulator 31 is controlled to maintain the internal temperature of the pressurized chamber 20 at the predetermined temperature. This predetermined temperature, at which the beverage in the containers can be sterilized, is varied depending on the type and amount of components of the beverage in the containers. In the case where the beverage contains a component of a low-boiling-point and/or carbon dioxide gas as described above, for example, the higher the predetermined temperature, the larger the content of the low-boiling-point component and/or the carbon dioxide gas. In the case where the beverage contains a plant tissue component to be sterilized, on the other hand, the higher the predetermined temperature, the higher the temperature required to sterilize the tissue component. In the case where the predetermined temperature adapted for sterilization is high, the predetermined pressure M1 of the pressurized chamber 20 is also required to be correspondingly high.

On the other hand, as shown in Fig. 2b, the pressure M1 of the pressurized chamber 20 is maintained at a predetermined pressure P1 during the period T2. Also, as described above, the temperature L1 of the pressurized chamber is maintained at a predetermined temperature during the period T2, and therefore, the container temperature L2 also follows the temperature L1 of the pressurized chamber 20. Since the container temperature L2 is constant, the gas ceases to be generated in the containers. As a result, the container pressure M2 also approaches a predetermined value.

Next, during the period T3 following the period T2, the steam accumulator 31 and the pump 19B are stopped, after which the liquid such as water in the water tank 13A is supplied into the pressurized chamber 20 from the shower nozzles 23, 24. This water is circulated in the pressurized chamber 20 by driving the pump 19C, and supplied from above the pressurized chamber 20. The water, after passing through the porous plate 14, is sprayed over the whole container 22 so as to reduce the temperature L1 of the pressurized chamber 20.

Upon lapse of a predetermined length of time from the start of the period T3, the valve (not shown) in the pipe 55A is opened to drain the water A in the pressurized chamber 20 into the drain chamber 41. In the process, the compressed air in the pressurized chamber 20 can play the role of pushing out the water A to the drain chamber 41 through the pipe 55A, and therefore, a pump for the drain is not required. The water thus drained is supplied to the drain tank 42 through the pipe 58.

Also, at about the same time that the water is drained, the liquid in the water tank 13B such as water lower in temperature than the water in the water tank 13A, for example, is supplied into the pressurized chamber 20 from the shower nozzles 23, 24. By driving the pump 19C, this water is circulated in the pressurized chamber 20, and being supplied from above the pressurized chamber 20, sprayed over the whole carriage box 22 through the porous plate 14 thereby to further reduce the temperature L1 of the pressurized chamber 20. By using the water in a plurality of water tanks, the temperature L1 of the pressurized chamber 20 is reduced while avoiding a sharp temperature change. As a result, during the period T3, the container temperature L2 is also decreased following the temperature L1 of the pressurized chamber 20. Therefore, the gas generated in the containers when increasing the temperature L2 of the container is dissolved again into the beverage in the containers, and the container pressure M2 gradually decreases (see Fig. 2b). Upon further lapse of a predetermined length of time, the valve (not shown) on the pipe 55B is opened to drain the water A in the pressurized chamber 20 into the water tank 13A. Also at this time, the compressed air in the pressurized chamber 20 can play the role of pushing out the water A to the water tank 13A through the pipe 55B, and therefore, a pump for a drain is not required.

The water stored in the drain tank 42 in this way is recovered into the water tank 13A through the pipe 59 and reused. Also, the water drained through the pipe 55B is recovered into the water tank 13A and reused. The compressed air can enter the pipes 59, 55B to some degree, and therefore, the pipes 59, 55B include decompression valves 43A, 43B, respectively, as shown. The compressed air and water in the pipes 59, 55B, thus decompressed through the decompression valves 43A, 43B, are supplied to the water tank 13A. In this way, according to this invention, the compressed air and the water A in the pressurized chamber 20 can be drained easily, while at the same time making it possible to reuse the water A in the pressurized chamber 20.

Upon lapse of the predetermined time Q from the start of the period T3, the on/off valve 45 is opened and the compressed air in the pressurized chamber 20 is drained to the drain chamber 41 thereby to reduce the pressure M1 of the pressurized chamber 20. After the pressure M1 of the pressurized chamber 20 reaches almost the normal temperature, the pressurized chamber 20 is opened and the carriage box 22 is recovered. The pressurized chamber 20 may of course be opened under a pressure slightly higher than the normal pressure and/or at a temperature slightly higher than the normal temperature. The compressed air, after being decompressed to a certain degree in the drain chamber 41, is supplied into the drain tank 42 through the pipe 58. Then, the air is drained through the pipe 57.

Referring again to Fig. 2b, according to this invention, the difference between the container pressure M2 and the pressure M1 of the pressurized chamber 20 is set to ΔP0 for the period T0, ΔP1 for the period T1 and ΔP2 for the period T2. Further, the aforementioned pressure difference with a high internal pressure M1 (predetermined pressure P1) of the pressurized chamber 20 for the period T3 is set to ΔP31, and the pressure difference with a reduced internal pressure M1 of the pressurized chamber 20 for the period T3 is set to ΔP32. As described above, in the case where the difference between the internal and external pressures of the container filled with the beverage and hermetically sealed exceeds the critical pressure PL (gage pressure) of the container, i.e. in the case where M2 - M1 = ΔP > PL, then the container is deformed and broken. The pressure difference ΔP0 for the period T0 before beverage sterilization is of course smaller than the critical pressure PL. Since the pressure difference ΔP2 for the period T2 when the container pressure M2 is highest is lower than the critical pressure PL, the container is not deformed or broken at the time of sterilization of the beverage therein. This pressure difference ΔP2, though smaller than the critical pressure PL, assumes a value comparatively proximate to the critical pressure PL.

In the case where the pressure M1 of the pressurized chamber 20 is not increased during the period T1 such as in the case where the pressure M1 of the pressurized chamber 20 remains at 0 kPa, for example, the difference ΔP1 between the container pressure M2 and the pressure M1 of the pressurized chamber 20 may exceed the critical pressure PL and deform or break the container. According to this invention, in contrast, the pressure M1 of the pressurized chamber 20 is increased to such an extent that the difference ΔP1 between the container pressure M2 and the pressure M1 of the pressurized chamber 20 for the period T1 may not exceed the critical pressure PL, and therefore, even in the case where the container temperature is increased to a level capable of sterilization and the container pressure M2 is increased accordingly, the pressure difference ΔP1 never exceeds the critical pressure PL so that the container is not deformed or broken. According to this invention, therefore, the beverage in the container can be sterilized by heat without deforming or breaking the container even at the time of temperature increase (period T1) of the pressurized chamber 20 accommodating the container filled with the beverage which generates a gas from itself when heated to the temperature required for sterilization.

Also, as shown in Fig. 2b, the pressure M1 of the pressurized chamber 20 is decreased rapidly, while the container pressure M2 is reduced by the dissolution of the gas again into the beverage in the container with the temperature decrease of the container. In the case where the pressure M1 of the pressurized chamber 20 is reduced immediately after the start of the period T3 for reducing the container temperature L2, the difference ΔP between the internal and external pressures of the container may exceed the critical pressure PL and break or deform the container. According to this invention, however, the pressure difference ΔP31 is reduced in advance by decreasing the container temperature L2 and thus reducing the container pressure M2, and therefore, the pressure difference ΔP32 never exceeds the critical pressure PL even in the case where the pressure M1 of the pressurized chamber 20 is subsequently reduced. As a result, according to this invention, even while the temperature of the pressurized chamber 20 is being reduced (period T3), it is possible to prevent the container from being deformed or broken. Also, as shown in Fig. 2b, from the start of the period T3 for reducing the container temperature, the internal pressure M1 of the pressurized chamber 20 is reduced upon lapse of a predetermined sufficient length of time Q to reduce the container pressure to a level at which the pressure difference may not exceed the critical pressure. Thus, the container can be positively prevented from being deformed or broken at the time of decreasing the temperature of the pressurized chamber (period T3). Further, the relation between the temperature L1 of the pressurized chamber 20 and the container pressure M2 during the period T3 may be determined in advance as a map or the like, so that the container pressure M2 is calculated from the temperature L1 of the pressurized chamber 20 that can be easily monitored, and when the container pressure M2 reaches a predetermined value, the pressure M1 of the pressurized chamber 20 may be reduced. In similar fashion, the relation between the container temperature L2 and the container pressure M2 during the period T3 may be determined as a map in advance, so that the container pressure M2 is determined from the container temperature L2, and when the container pressure M2 reaches a predetermined value, the pressure M1 of the pressurized chamber 20 may be reduced. In any case, the container can be prevented from being deformed or broken at the time of decrease in the temperature of the pressurized chamber (period T3).

Now, the decompression valve group 15 arranged on the pipe 51 is explained. The decompression valve group 15 includes a plurality of, or in Fig. 1, four decompression valves 15A to 15D. As shown, the decompression valves 15A to 15D are arranged on the four branch pipes 52A to 52D, respectively, of the pipe 51. The internal pressure of the pressurized chamber 20 required to sterilize the container filled with a beverage and hermetically sealed is varied depending on the critical pressure of the container, the contents of the beverage and the amount of the contents. In the case where the critical pressure of the container is comparatively high, for example, a pressure of the pressurized chamber 20 may be low, while in the critical pressure of the container is comparatively low, on the other hand, the internal pressure of the pressurized chamber 20 is required to be high. Also, as can be seen from Fig. 4, in the case where the beverage generating a gas from itself when heated to the temperature required for sterilization is a carbonated beverage, for example, the higher the internal pressure of the container, the larger the content of the carbon dioxide gas, and therefore, the internal pressure of the pressurized chamber 20 is required to be increased. For this reason, the plurality of the decompression valves 15A to 15D according to this invention are preset to different values of the internal pressure of the pressurized chamber 20. As a result, depending on the internal pressure of the pressurized chamber 20 required for a particular container to be sterilized, one decompression valve can be selected from the decompression valves 15A to 15D. In the case where a plurality of types of containers filled with different contents of beverages are required to be sterilized by a beverage sterilization apparatus having only one decompression valve, the decompression valve is required to be adjusted each time each of the container is sterilized. According to this invention, however, a preset decompression valve corresponding to each container is simply selected from the decompression valve group 15, and therefore, the bothersome adjustment of the decompression valve can be avoided. Also, as shown, automatic valves such as automatic valves 16B, 16C may be appropriately arranged in series to the decompression valves, respectively.

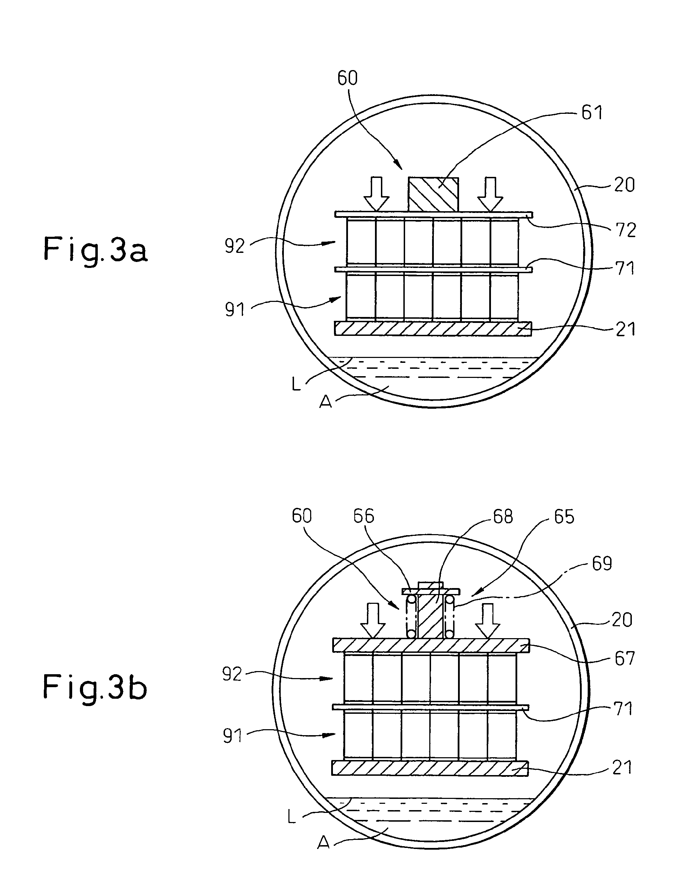

Fig. 3a is a partially enlarged view showing a beverage sterilization apparatus according to a second embodiment of the invention. To facilitate the understanding, the pipes, etc. connected to the pressurized chamber are not shown in Fig. 3a. In Fig. 3a, the pipe 52 for supplying the compressed air is not connected, and in its place, a mechanical pressure means 60 for mechanically pressuring each container is included. As shown in Fig. 3a, a first container group 91 of a plurality of containers are aligned and arranged on the support base 21. Further, after placing a plate 71 on the first container group 91, a second container group 92 of a plurality of containers are similarly arranged on the plate 71. The first and second container groups 91, 92 include the containers of the same contents. Further, another plate 72 is placed on the second container group 92. Then, a weight 61 included in the mechanical pressure means 60 in Fig. 3a is arranged on the plate 72. As a result, the load of the weight 61 is imposed on the container groups 91, 92 through the plates 72, 71 thereby to apply a substantially uniform pressure to each container in the container groups 91, 92. The weight of the weight 61 is determined in such a manner that the difference between the internal and external pressures of each container in the container groups 91, 92 may not exceed the critical pressure, and is varied with the number of container groups (stages) and the number of containers in each container group. As described above, by controlling the temperature of the pressurized chamber, the beverage in the containers can be sterilized by heat without deforming or breaking the containers even while the temperature of the pressurized chamber is being increased or decreased. Further, according to the embodiment shown in Fig. 3a, as compared with a case in which the internal pressure of the containers in the pressurized chamber 20 is indirectly increased by supplying the compressed air to the pressurized chamber 20, for example, the container pressure can be rapidly and positively increased and the air tank 12 for the compressed air can be eliminated.

Fig. 3b is a partially enlarged view showing a beverage sterilization apparatus according to another embodiment of the invention. To facilitate understanding, the pipes, etc. connected to the pressurized chamber 20 are not shown in Fig. 3b. In Fig. 3b, the mechanical pressure means 60 includes a holding plate 67 in the shape corresponding to the support base 21 and a shaft 68 extending from one side of the holding plate 67. An adjust member 66 is screwed to the forward end of the shaft 68 formed with threads, and a spring 69 is interposed between the adjust member 66 and the holding plate 67. The container groups 91, 92 are arranged in the same manner as in Fig. 3a, and the adjust member 66 is moved toward the container groups 91, 92 thereby to transfer the urging force of the spring 69 to the container groups 91, 92 through the holding plate 67. As a result, a substantially uniform pressure is exerted on each container of the container groups 91, 92. Also in this embodiment, therefore, as described above, the beverage in the containers can be sterilized by heat without deforming or breaking the containers by controlling the temperature of the pressurized chamber even while the temperature of the pressurized chamber is being increased or decreased. Further, according to this embodiment, the urging force transmitted to the container groups 91, 92 can be easily adjusted by the adjust member 66. Even in the case where the number of the container groups (number of the stages) or the number of the containers in each container group is changed, therefore, an appropriate countermeasure can be easily taken. Also, the pressure exerted on the containers can be adjusted in accordance with the heating operation. The plates 71, 72, the weight 61, the holding plate 67 and the support base 21 shown in Fig. 3a and/or Fig. 3b are preferably formed of a porous material or formed with a multiplicity of pores so that the heated water A can be sprayed over the entire container groups 91, 92.

Further, if the pressure of the pressurized chamber 20 is increased only by supplying the compressed air while at the same time increasing the container temperature by supplying the heated water into the pressurized chamber 20, under this condition, the pressure M1 of the pressurized chamber 20 exceeds a certain value. Then, it becomes difficult to supply the heated water into the pressurized chamber 20 and a pump having a comparatively high head is required to supply the heated water under the high pressure. In the embodiments shown in Figs. 3a, 3b, however, the compressed air in the pressurized chamber 20 can be saved by an amount equivalent to the mechanical force exerted on the containers by the mechanical pressure means 60. As a result, the heated water can be supplied to the pressurized chamber 20 with comparative ease. According to this embodiment, therefore, a pump having a comparatively low head such as in the value between the conventional pump and the pump 19A or a pump having the head of about 29 m to 40 m, for example, can be used for supplying the heated water.

This invention can of course employ any mechanical pressure means 60 capable of applying a force mechanically to the container. Although two container groups are shown in Figs. 3a, 3b, the number of container groups and the containers in each group are not limited to the cited ones. Also, carriage boxes 22 may be used together. Further, arbitrary ones of the embodiments described above may be apparently combined within the scope of the invention. Furthermore, as shown in Fig. 2, both the pressure M1 and the temperature L1 of the pressurized chamber 20 may be increased substantially at the same time and, similarly, both the pressure M1 and the temperature L1 of the pressurized chamber 20 may be decreased substantially at the same time. Also, the container temperature L2 may be increased by increasing the temperature L1 of the pressurized chamber after increasing the pressure M1 of the pressurized chamber 20 to a predetermined level on the one hand, and the pressure M1 of the pressurized chamber may be decreased after decreasing the container temperature L2 by reducing the temperature L1 of the pressurized chamber to a predetermined temperature.

Although this invention is explained above with reference to typical embodiments, it will be understood that those skilled in the art can make the aforementioned alteration, and various other modifications, omission or addition without departing from the scope and spirit of the invention.
- 10: Beverage sterilization apparatus
- 11: Compressor
- 12: Air tank
- 13: Water tank
- 14: Porous plate
- 15: Decompression valve group
- 19A, 19B: Pump
- 20: Pressurized chamber
- 21: Support base
- 22: Carriage box
- 23, 24: Shower nozzle
- 27, 28,: 29Safety valve
- 31: Steam accumulator
- 41: Drain chamber
- 42: Drain tank
- 60: Mechanical pressure means
- 61: Weight
- 66: Adjust member
- 67: Holding plate
- 69: Spring
- 91, 92: Container group

## Claims

1. A beverage sterilization method, comprising a step of:
arranging a container in a pressurized chamber, the container is hermetically sealed and is filled with a beverage,
increasing the pressure of the pressurized chamber to a first pressure,
increasing the temperature of the container by increasing the internal temperature of the pressurized chamber to a first temperature in such a manner that the difference between the pressure of the container and the first pressure of the pressurized chamber at the first temperature may remain within a predetermined range,
sterilizing the beverage in the container by holding the pressurized chamber at the first temperature for a predetermined length of time,
decreasing the temperature of the container by decreasing the internal temperature of the pressurized chamber to a second temperature, which is lower than the first temperature, in such a manner that the difference between the pressure of the container and the first pressure of the pressurized chamber at the second temperature may remain within a predetermined range, and
decreasing the pressure of the pressurized chamber to a second pressure lower than the first pressure.

2. A beverage sterilization method, comprising a step of:
arranging a container in a pressurized chamber, the container is hermetically sealed and is filled with a beverage,
increasing the temperature of the container by increasing the internal temperature of the pressurized chamber to a predetermined temperature and by increasing the pressure of the pressurized chamber in such a manner that the difference between the pressure of the container and the pressure of the pressurized chamber may remain within a predetermined range,
sterilizing the beverage in the container by holding the pressurized chamber at the predetermined temperature for a predetermined length of time, and
decreasing the temperature of the container by decreasing the internal temperature of the pressurized chamber and by decreasing the pressure of the pressurized chamber in such a manner that the difference between the pressure of the container and the pressure of the pressurized chamber may remain within a predetermined range.

3. The beverage sterilization method according to claim 1 or 2,
wherein the beverage is of such a type as to generate a gas from itself when heated to the temperature required for sterilization of the particular beverage.

4. The beverage sterilization method according to claim 1 or 3,
wherein the pressure of the pressurized chamber is decreased upon lapse of a predetermined length of time after decreasing the internal temperature of the pressurized chamber.

5. The beverage sterilization method according to any one of claims 1 to 4,
wherein the pressure of the container is increased by exerting a mechanical force on the container.

6. A beverage sterilization apparatus comprising:
a pressurized chamber accommodating a container, which is hermetically sealed and is filled with a beverage;
a pressure increasing/decreasing means for increasing or decreasing the pressure of the pressurized chamber;
a temperature increasing/decreasing means for increasing or decreasing the temperature of the container by increasing or decreasing the temperature of the pressurized chamber; and
a control means to control the pressure increasing/decreasing means and the temperature increasing/decreasing means to sterilize the beverage in the container;
wherein the control means increases the pressure of the pressurized chamber to a first pressure using the pressure increasing/decreasing means,
increases the internal temperature of the pressurized chamber to a first temperature using the temperature increasing/decreasing means in such a manner that the difference between the pressure of the container and the first pressure of the pressurized chamber at the first temperature may remain within a predetermined range,
sterilize the beverage in the container by holding the pressurized chamber at the first temperature for a predetermined length of time,
decreases the internal temperature of the pressurized chamber to a second temperature, which is lower than the first temperature, using the temperature increasing/decreasing means in such a manner that the difference between the pressure of the container and the first pressure of the pressurized chamber at the second temperature may remain within a predetermined range, and
decreases the pressure of the pressurized chamber to a second pressure lower than the first pressure using the pressure increasing/decreasing means.

7. A beverage sterilization apparatus comprising:
a pressurized chamber accommodating a container which is hermetically sealed and is filled with a beverage;
a pressure increasing/decreasing means for increasing or decreasing the pressure of the pressurized chamber;
a temperature increasing/decreasing means for increasing or decreasing the temperature of the container by increasing or decreasing the temperature of the pressurized chamber; and
a control means to control the pressure increasing/decreasing means and the temperature increasing/decreasing means to sterilize the beverage in the container;
wherein the control means increases the internal temperature of the pressurized chamber to a predetermined temperature using the temperature increasing/decreasing means, while increasing the pressure of the pressurized chamber using the pressure increasing/decreasing means in such a manner that the difference between the pressure of the container and the pressure of the pressurized chamber may remain within a predetermined range,
sterilizing the beverage in the container by holding the pressurized chamber at the predetermined temperature for a predetermined length of time, and
decreases the internal temperature of the pressurized chamber using the temperature increasing/decreasing means, while decreasing the pressure of the pressurized chamber using the pressure increasing/decreasing means in such a manner that the difference between the pressure of the container and the pressure of the pressurized chamber may remain within a predetermined range.

8. The beverage sterilization apparatus according to claim 6 or 7,
wherein the beverage is of such a type as to generate a gas from itself when heated to the temperature required for sterilization.

9. The beverage sterilization apparatus according to claim 6 or 8,
wherein the pressure of the pressurized chamber is decreased using the pressure increasing/decreasing means upon lapse of a predetermined length of time after decreasing the internal temperature of the pressurized chamber using the temperature increasing/decreasing means.

10. The beverage sterilization apparatus according to any one of claims 6 to 9,
wherein the pressure increasing/decreasing means includes a mechanical pressure unit for pressuring the container by applying a mechanical force to the container in the pressurized chamber.

11. A beverage sterilization apparatus comprising:
a chamber for arranging therein at least a container filled with a beverage and hermetically sealed;
a mechanical pressure means for applying pressure to the container in the chamber by exerting a mechanical force on the container; and
a temperature increasing/decreasing means for increasing or decreasing the temperature of the container by increasing or decreasing the temperature of the pressurized chamber;
wherein the container pressured by the mechanical pressure means is held for a predetermined length of time in the chamber increased in temperature by the temperature increasing/decreasing means thereby to sterilize the beverage in the container.

12. The beverage sterilization apparatus according to claim 11,
wherein the beverage of such a type as to generate a gas from itself when heated to the temperature required for sterilization thereof.
